# EUROPÄISCHE PATENTSCHRIFT

(11) **EP 1 444 158 B1**
(45) Veröffentlichungstag und Bekanntmachung des Hinweises auf die Patenterteilung: **28.12.2005**
(21) Anmeldenummer: 02796535.9
(22) Anmeldetag: 31.10.2002
(51) Int. Cl.: B65H 75/14

(54) **WICKELSPULE**
WIND-UP REEL
BOBINE D'ENROULEMENT

(30) Priorität: 17.11.2001 DE 20118783 U
(43) Veröffentlichungstag der Anmeldung: 11.08.2004
(73) Patentinhaber: Häfner & Krullmann GmbH, D-33818 Leopoldshöhe (DE)
(72) Erfinder: HÄFNER, Manfred, 33818 Leopoldshöhe (DE)
(74) Vertreter: Specht, Peter
(86) Internationale Anmeldenummer: PCT/EP2002/012128
(87) Internationale Veröffentlichungsnummer: WO 2003/042084

(56) Entgegenhaltungen:
- US-A- 3 334 841
- US-A- 3 339 861
- US-A- 3 942 741
- US-A- 4 471 920
- PATENT ABSTRACTS OF JAPAN vol. 1999, no. 13, 30. November 1999 (1999-11-30) -& JP 11 228030 A (KOZUKA YOSHINOBU), 24. August 1999 (1999-08-24)

## Beschreibung

Die Erfindung betrifft eine Wickelspule, insbesondere für band- und fadenförmiges Wickelgut, mit einem zylinderförmigen Wickelkern und zwei seitlichen Spulenflanschen, und die aus zwei miteinander verklebten Spulenkörpern gebildet ist, wobei die Stoßflächen radial, vorzugsweise in der Mitte des Wickelkernes verlaufen, und der Verbindungsbereich wechselweise an den Spulenkörper angeformte Klebelaschen aufweist, die in entsprechende Einstecktaschen des jeweils anderen Spulenkörpers eingreifen (US-A-3 334 841).

Die in Rede stehenden Wickelspulen werden bevorzugt mit Drähten bewickelt, die zur Herstellung von elektronischen Geräten verwandt werden. Die beiden Spulenkörper sind in bevorzugter Ausführung baugleich, so daß sie mit dem gleichen Werkzeug hergestellt werden können. Da das Wickelgut mit einer relativ hohen Wickelgeschwindigkeit und demzufolge auch mit einer entsprechend hohen Drehzahl der Wickelspule aufgewickelt wird, ist eine besonders hohe Rundlaufgenauigkeit erforderlich. Die bislang bekannten Wickelspulen haben sich in der Praxis durchaus bewährt, das Zusammenfügen der beiden Spulenkörper war jedoch nicht immer zufriedenstellend. Außerdem standen die Klebelaschen an den Enden hoch, so daß sich Kanten auf der Oberfläche des Wickelkernes ergaben.

Der Erfindung liegt die Aufgabe zugrunde, eine Wickelspule der eingangs näher beschriebenen Art so zu gestalten, daß der Verbindungsbereich der beiden Spulenkörper optimal gestaltet ist, so daß die Rundlaufgenauigkeit gegeben ist, und daß es zu keinerlei Verformungen und Kanten im Verbindungsbereich kommt.

Die gestellte Aufgabe wird gelöst, indem zur Erhöhung des auf die Kontaktflächen des Verbindungsbereiches wirkenden Anpreßdruckes die Spulenkörper form- und kraftschlüssig miteinander verbunden sind.

Da die Verbindungsbereiche nunmehr so gestaltet sind, daß der auf die miteinander zu verklebenden Kontaktflächen wirkende Druck gegenüber den bekannten Ausführungen erhöht ist, führt dies zu einer verbesserten Verbindung. Die Klebelaschen und die Einstecktaschen sind so aufeinander abgestimmt, daß die Klebelaschen in die Einstecktaschen hineinpassen und gleichzeitig formschlüssig gehalten werden. Es wird immer eine glatte Oberfläche in jeder Position erzielt Es sind Hinterschneidungen derart vorgesehen, daß die Laschen in die richtige Position gezogen werden.

Es hat sich herausgestellt, wenn die Spulenkörper mit viereckigen bzw. rechtwinkligen Klebelaschen und Einstecktaschen versehen werden, daß die freien Enden der Klebelaschen dazu neigen, daß sie sich beim Zusammenstecken verformen, so daß die freien Enden sinngemäß gegenüber den Füßen der Klebelaschen vorstehen. Um diesen Nachteil auszuschalten, ist in bevorzugter Ausführung vorgesehen, daß die gegenüber der Stoßfläche vorstehenden Klebelaschen in einem Bogen, vorzugsweise in einem Halbkreis verlaufen und daß die Einstecktaschen eine daran angepaßte Form aufweisen. Es wird jedoch dadurch nicht nur das Vorstehen der Enden der Klebelaschen vermieden, sondern es werden außerdem größtmögliche Kontaktflächen für die Verklebung der beiden Spulenkörper erzielt. Obwohl von außen keine Kraft auf die Klebelaschen wirkt, die die Laschenspitzen herunterdrücken würden, ist das sog. Hochstehen vermieden, da nunmehr der Verbindungsbereich so geschaffen ist, daß auf die Spitze jeder Lasche eine entsprechende Gegenkraft wirkt. Der Verlauf der Klebelaschen und der Einstecktaschen jedes Spulenkörpers ist bei dieser Ausführung wellenförmig. Damit die Gefahr einer Verformung der freien Endbereiche der Klebelaschen noch weiter herabgesetzt wird, ist vorgesehen, daß die bogenförmig verlaufenden Klebelaschen jedes Spulenkörpers an den freien, der Stoßkante abgewandten Seiten Abflachungen aufweisen, und daß die Einstecktaschen entsprechende Füllstücke aufweisen, so daß eine durchgehende Berührungsfläche gebildet wird. Es ist außerdem noch möglich, daß die freien, der Stoßkante abgewandt liegenden Enden der Klebelaschen an den den Einstecktaschen zugewandten Seiten eine Fase aufweisen. Dadurch wird die Gefahr des Hochstehens noch weiter vermindert. Sofern die Klebelaschen mit Abflachungen bzw. Fasen versehen sind, ist es auch möglich, daß die Klebelaschen und die Einstecktaschen viereckig bzw. rechtwinklig gestaltet sind. Es sei noch erwähnt, daß die Spulenkörper einstückig aus Kunststoff im Spritzgießverfahren hergestellt werden.

Anhand der beiliegenden Zeichnungen wird die Erfindung noch näher erläutert. Es zeigen:
- Figur 1: eine bevorzugte Ausführungsform eines Spulenkörpers in perspektivischer Darstellung,
- Figur 2: zwei Spulenkörper gemäß der Figur 1 im getrennten Zustand,
- Figur 3: die beiden Spulenkörper gemäß der Figur 2 im zusammengefügten Zustand,
- Figur 4: den Verbindungsbereich der beiden Spulenkörper in vergrößerter Darstellung und
- Figur 5: eine Wickelspule im zusammengefügten Zustand, in einer zweiten Ausführungsform.

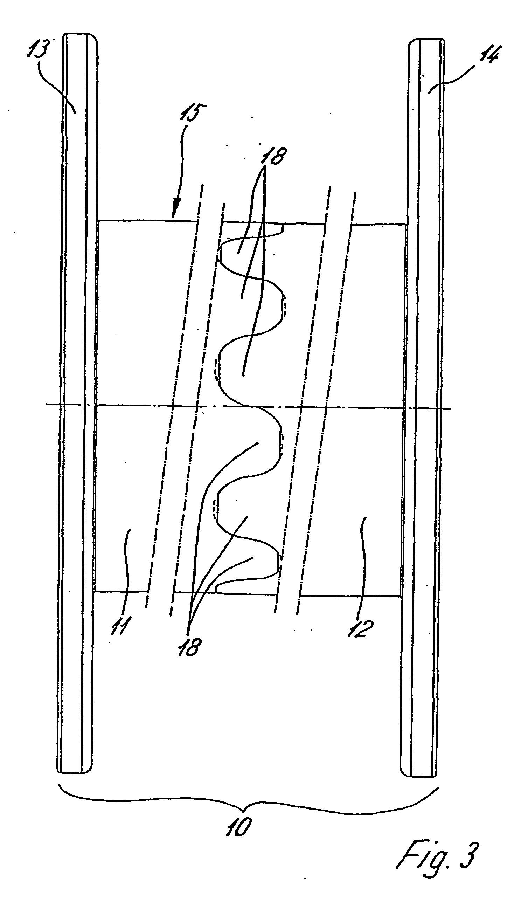

Die Wickelspule 10 besteht aus den beiden Spulenkörpern 11, 12, die nach dem Zusammenfügen entsprechend der Figur 3 form- und kraftschlüssig miteinander verbunden sind. Die Kontaktflächen werden außerdem durch Klebung miteinander verbunden. Die Wickelspule 10 besteht aus den zwei seitlichen Spulenflanschen 13, 14 und dem zylindrischen Wickelkern 15, wobei im dargestellten Ausführungsbeispiel die Stoßflächen 16, 17 der beiden Spulenkörper 11, 12 mittig zwischen den beiden Spulenflanschen 13, 14 liegen. Die Verbindungsbereiche der beiden Spulenkörper 11, 12 bestehen aus Klebelaschen 18 und Einstecktaschen 19, die wechselweise angeordnet sind, d.h. die Klebelaschen 18 eines Spulenkörpers 11 bzw. 12 stehen den Einstecktaschen 19 des jeweils anderen Spulenkörpers 11 bzw. gegenüber, sofern die Spulenkörper 11, 12 noch nicht zusammengefügt sind. Im zusammengefügten Zustand liegen die Klebelaschen 18 eines Spulenkörpers 11, 12 in den Einstecktaschen 19 des jeweils anderen Spulenkörpers 11, 12.

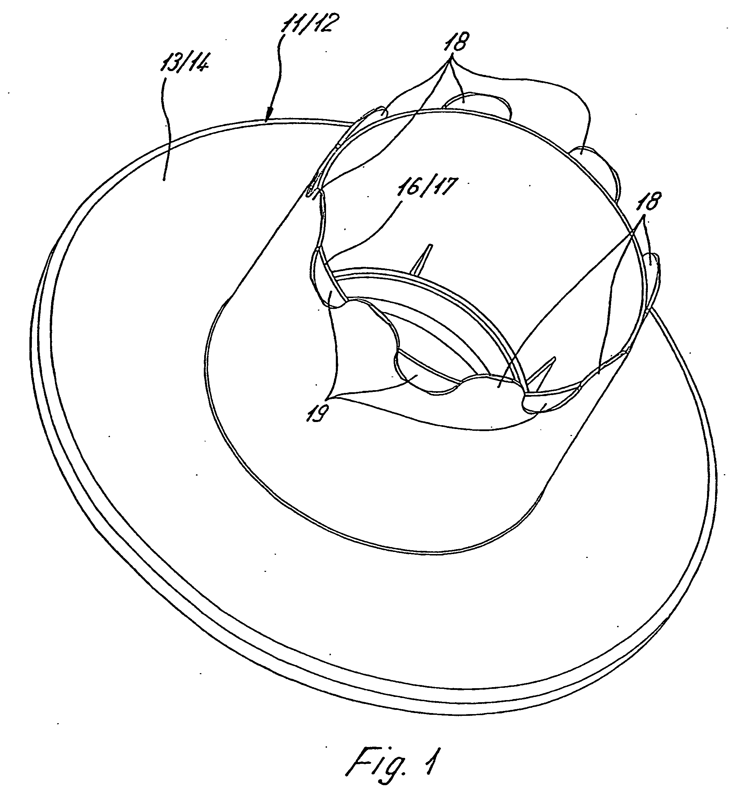

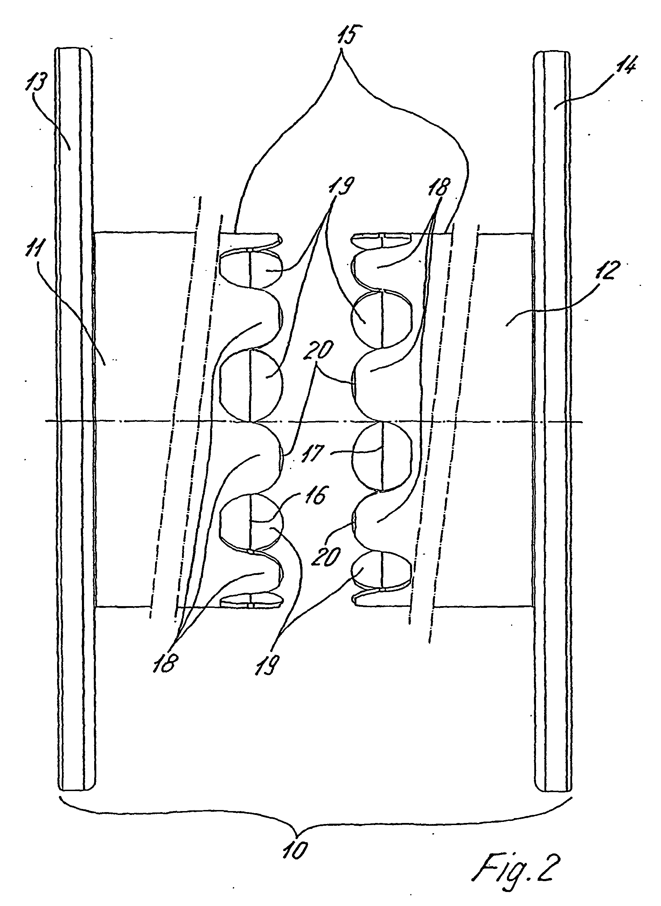

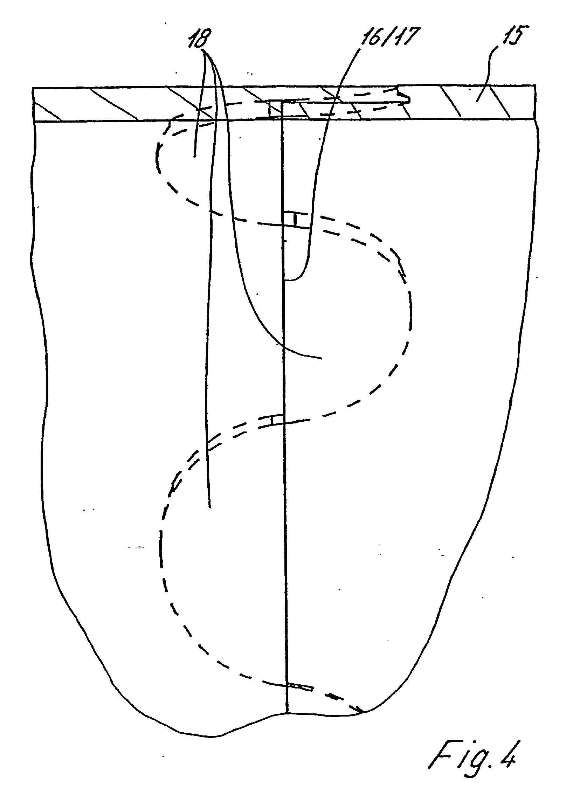

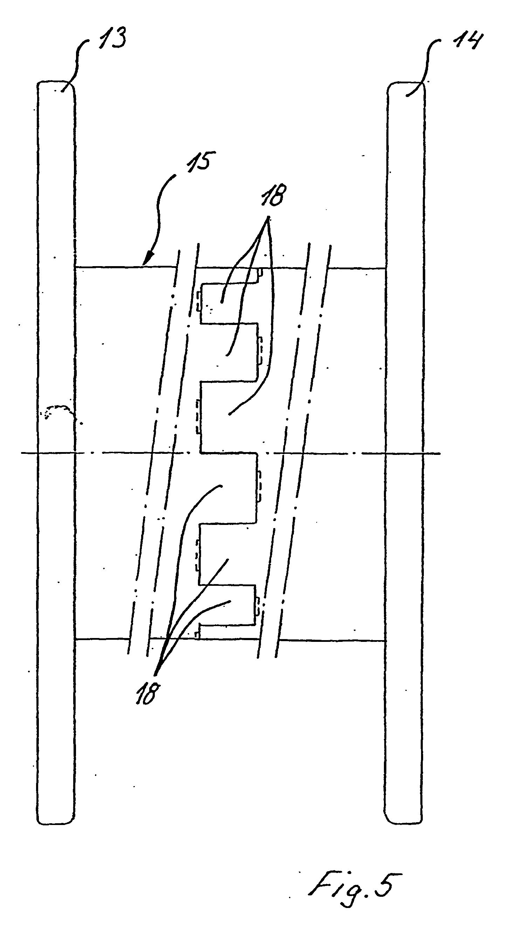

Wie insbesondere die Figur 2 zeigt, sind die freien, den Spulenflanschen 13, 14 abgewandt liegenden Endbereich der Klebelaschen 18 mit Abflachungen versehen bzw. mit Flächen 20 versehen, die parallel zu den Spulenflanschen 13,14 verlaufen. Die Einstecktaschen 19 sind mit entsprechenden Füllstücken versehen, so daß wiederum eine flächige Anlage erfolgt. Durch die Flächen 20 wird beim Zusammenfügen der Spulenkörper 11,12 eine Verformung nach außen bzw. oben der freien Endbereiche der Klebelaschen 18 verhindert. Die Klebelaschen 18 und die Einstecktaschen 19 sind so aufeinander abgestimmt, daß eine form- und kraftschlüssige Verbindung der beiden Spulenkörper 11, 12 erfolgt. Außerdem sind die Klebelaschen 18 und die Einstecktaschen 19 so ausgelegt, daß eine glatte Außenfläche auch im Verbindungsbereich des Wickelkerns 15 sichergestellt ist. Zweckmäßigerweise sind die Dicken der Klebelaschen 18 und die Dicken im Bereich der Einstecktaschen 19 gleich. Bei der Ausführung gemäß den Figuren 1 bis 4 sind die Klebelaschen und die Einstecktaschen 19 in ihrer Grundform, d.h. abgesehen von den Flächen 20 halbkreisförmig ausgebildet. Dadurch ergibt sich ein wellenförmiger Verlauf der Klebelaschen 18 und der Einstecktaschen 19. Die Klebelaschen 18 und die Einstecktaschen 19 könnten jedoch auch in einem anderen Bogen verlaufen. Anstelle der Flächen 20 könnten die Klebelaschen 18 an der inneren, der Drehachse der Wickelspule 10 zugewandten Seite mit Fasen versehen sein. Die Einstecktaschen 19 hätten dann entsprechende Füllstücke, so daß wiederum eine flächige Anlage gegeben ist. Insbesondere die Figur 1 zeigt, daß die Tiefen der Einstecklaschen 19 der halben oder annähernd der halben Wandstärke des Wickelkernes entspricht, so daß sie axial auf der gleichen Ebene verlaufen. Die Dicken der Klebelaschen 18 sind entsprechen. Insbesondere wenn die Klebelaschen 18 mit den Fasen versehen sind, könnten Sie auch entsprechend der Figur 5 viereckig bzw. rechtwinklig gestaltet sein.

Die Erfindung ist nicht auf die dargestellten Ausführungsbeispiele beschränkt. Wesentlich ist die kraft- und formschlüssige Verbindung der beiden Spulenkörper 11, 12 im Verbindungsbereich des Wickelkerns 15. Bevorzugt werden die Klebelaschen 18 und die Einstecktaschen 19 halbkreisförmig ausgebildet.

## Patentansprüche

1. Wickelspule, insbesondere für band- und fadenförmiges Wickelgut, mit einem zylinderförmigen Wickelkern (15) und zwei seitlichen Spulenflanschen (13, 14), und die aus zwei miteinander verklebten Spulenkörpern (11, 12) gebildet ist, wobei die Stoßflächen radial, vorzugsweise in der Mitte des Wickelkerns verlaufen, und der Verbindungsbereich wechselweise an den Spulenkörpern angeformte Klebelaschen (18) aufweist, die in entsprechende Einstecktaschen (19) des jeweils anderen Spulenkörpers eingreifen, **dadurch gekennzeichnet, daß** zur Erhöhung des auf die Kontaktflächen des Verbindungsbereiches wirkenden Anpreßdruckes die Spulenkörper (11, 12) form- und kraftschlüssig miteinander so verbunden sind, daß beim Zuammen fügen der Spulenkörper (11, 12) eine Verformung nach außen bzw. oben der freien Endbereiche der Klebelaschen (18) verhindert wird.

2. Wickelspule nach Anspruch 1, **dadurch gekennzeichnet, daß** die gegenüber den Stoßflächen (16, 17) vorstehenden Klebelaschen (18) in einem Bogen, vorzugsweise in einem Halbkreis verlaufen, und daß die Einstecktaschen eine entsprechende Form aufweisen.

3. Wickelspule nach Anspruch 1 oder 2, **dadurch gekennzeichnet, daß** die gegenüber den Stoßflächen (16, 17) vorstehenden Klebelaschen (18) an den freien, den Stoßflächen (16, 17) abgewandten Seiten Abflachungen (20) aufweisen, und daß die Einstecktaschen (19) entsprechende Füllstücke aufweisen.

4. Wickelspule nach Anspruch 1 oder 2, **dadurch gekennzeichnet, daß** die gegenüber den Stoßflächen (16, 17) vorstehenden Klebelaschen (18) an den freien, den Stoßflächen (16, 17) abgewandten Seiten Fasen aufweisen, die der Drehachse der Wickelspule (10) zugewandt liegen.

5. Wickelstpule nach Anspruch 3 oder 4, **dadurch gekennzeichnet, daß** die gegenüber den Stoßflächen (16, 17) vorstehenden Klebelaschen (18) viereckig bzw. rechtwinklig ausgebildet sind.

## Claims

1. Winding spool, in particular for ribbon-shaped and thread-shaped winding material, having a cylindrical winding core (15) and two lateral spool flanges (13, 14), and which is formed from two spool bodies (11, 12), which are adhesively bonded to one another, the abutting faces extending radially, preferably in the centre of the winding core, and the connecting region having adhesive tabs (18), which are integrally formed alternately on the spool bodies and engage in corresponding insertion pockets (19) of the respective other spool body, **characterized in that** the spool bodies (11, 12) are connected to one another in an interlocking and force-fitting manner so as to increase the applied pressure acting on the contact faces of the connecting region and so as to prevent deformation towards the outside or upwards of the free end regions of the adhesive tabs (18) when the spool bodies (11, 12) are joined together.

2. Winding spool according to Claim 1, **characterized in that** the adhesive tabs (18) protruding with respect to the abutting faces (16, 17) extend in an arc, preferably in a semicircle, and **in that** the insertion pockets have a corresponding shape.

3. Winding spool according to Claim 1 or 2, **characterized in that** the adhesive tabs (18) protruding with respect to the abutting faces (16, 17) have flattened sections (20) at the free ends remote from the abutting faces (16, 17), and **in that** the insertion pockets (19) have corresponding filling pieces.

4. Winding spool according to Claim 1 or 2, **characterized in that** the adhesive tabs (18) protruding with respect to the abutting faces (16, 17) have bevels at the free ends remote from the abutting faces (16, 17), said bevels lying such that they face the axis of rotation of the winding spool (10).

5. Winding spool according to Claim 3 or 4, **characterized in that** the adhesive tabs (18) protruding with respect to the abutting faces (16, 17) are square or rectangular.

## Revendications

1. Bobine d'enroulement, en particulier pour un produit à enrouler en forme de bande ou de fil, avec un noyau d'enroulement (15) de forme cylindrique et deux brides de bobine (13, 14) latérales, et qui est formée de deux corps de bobine (11, 12) collés ensemble, les surfaces de jonction s'étendant radialement, de préférence au centre du noyau d'enroulement, et la zone de jonction présentant des pattes de collage (18) formées en alternance sur les corps de bobine, qui s'engagent dans des poches d'insertion (19) de l'autre corps de bobine, **caractérisée en ce que**, pour augmenter la pression s'exerçant sur les surfaces de contact de la zone de jonction, les corps de bobine (11, 12) sont assemblés par adhérence et par engagement de telle manière que, lors de l'assemblage des corps de bobine (11, 12), une déformation vers l'extérieur ou le haut des parties d'extrémité libre des pattes de collage (18) est évitée.

2. Bobine d'enroulement selon la revendication 1, **caractérisée en ce que** les pattes de collage (18) en saillie par rapport aux surfaces de jonction (16, 17) s'étendent selon un arc, de préférence en demi-cercle, et **en ce que** les poches d'insertion présentent une forme correspondante.

3. Bobine d'enroulement selon la revendication 1 ou 2, **caractérisée en ce que** les pattes de collage (18) en saillie par rapport aux surfaces de jonction (16, 17) présentent des méplats (20) au niveau des faces libres opposées aux surfaces de jonction (16, 17), et **en ce que** les poches d'insertion (19) présentent des pièces de remplissage correspondantes.

4. Bobine d'enroulement selon la revendication 1 ou 2, **caractérisée en ce que** les pattes de collage (18) en saillie par rapport aux surfaces de jonction (16, 17) présentent, au niveau des faces libres opposées aux surfaces de jonction (16, 17), des chanfreins qui sont tournés vers l'axe de rotation de la bobine d'enroulement (10).

5. Bobine d'enroulement selon la revendication 3 ou 4, **caractérisée en ce que** les pattes de collage (18) en saillie par rapport aux surfaces de jonction (16, 17) sont de forme quadrangulaire ou rectangulaire.
